# EUROPEAN PATENT APPLICATION

(11) **EP 4 437 918 A1**
(43) Date of publication of application: **02.10.2024**
(21) Application number: 21965051.2
(22) Date of filing: 24.11.2021
(51) Int. Cl.: A47J 43/046, A47J 43/07

(54) **MULTIFUNCTIONAL FOOD PROCESSOR**

(71) Applicant: Xiamen Youo Intelligent Technology Co., Ltd, Fujian 361100 (CN)
(72) Inventor: ZHOU, Yiyun, Xiamen, Fujian 361000 (CN)
(74) Representative: Chung, Hoi Kan
(86) International application number: PCT/CN2021/132637
(87) International publication number: WO 2023/092312

(57) **Abstract**

The present disclosure provides a multifunctional food processor including a machine base and a motor arranged in the machine base. An end of an output shaft of the motor is connected with a first rotation connector and is connected with a second rotation connector through a reducing mechanism; characterized in that the reducing mechanism includes a support frame and driven gear sets, a plurality of driven gear sets are arranged around a periphery of the output shaft through the support frame and form mutual transmission with the output shaft through a transmission gear; the second rotation connector is sleeved outside the plurality of driven gear sets, and an inner sidewall of the second rotation connector is provided with gear teeth meshing with the driven gear sets; wherein a transmission ratio of the reducing mechanism is 8-12:1.

## Description

### TECHNICAL FIELD

The present disclosure relates to a multifunctional food processor.

### BACKGROUND

Food processors having various functions such as making soy milk, grinding powder, squeezing juice, making chopped meat and shaved ice can make food preparation simpler and richer so they are liked and popular among consumers. Traditional food processors have relatively single functions, usually only have one motor speed, and cannot meet multiple speed requirements at the same time, which is unfavourable.

At present, food processors with two motor speeds generally have a high-speed output transmission member at the end of the motor output shaft, and a low-speed output transmission member connected to the middle of the motor output shaft through a reducer, thereby overcoming the defects of traditional food processors and enabling them to achieve high and low speed output functions, so as to match work bowls of different functions and achieve multiple purposes with one machine. However, the reducer in this solution is a planetary gear reducer which has a relatively complex structure and is too large in size, making it inconvenient to store and carry the food processor and extremely inconvenient to use.

### SUMMARY

The present disclosure provides a multifunctional food processor, which can effectively solve the above problems.

The present disclosure is realized by the following solutions.

A multifunctional food processor comprises a machine base and a motor arranged in the machine base, wherein an end of an output shaft of the motor is connected with a first rotation connector and is connected with a second rotation connector through a reducing mechanism; characterized in that the reducing mechanism comprises a support frame and driven gear sets, a plurality of driven gear sets are arranged around a periphery of the output shaft through the support frame and form mutual transmission with the output shaft through a transmission gear; the second rotation connector is sleeved outside the plurality of driven gear sets, and an inner sidewall of the second rotation connector is provided with gear teeth meshing with the driven gear sets; wherein a transmission ratio of the reducing mechanism is 8-12:1.

Compared with the prior art, the present disclosure has the following advantages.
1. The reducing mechanism of the present disclosure has a simple structure and a compact arrangement, which overcomes the defects of complex structure and excessive volume of the existing food processors which generally have the planetary gear reducer, thereby making the structure of the machine base more compact and flexible, and making it convenient for storage and carrying.
2. The present disclosure optimizes the design of the structure of the machine base, and the improved machine base has the advantages of simple structure, compact arrangement, convenient disassembly and assembly, firmness and reliability, delicate and nice appearance, etc.
3. The present disclosure optimizes the transmission ratio of the reducing mechanism, so as to realize high rotation speed which is suitable for operations such as fresh juice squeezing with low torque requirements, and realize low rotation speed which is suitable for operations such as meat chopping with high torque requirements.

### BRIEF DESCRIPTION OF THE DRAWINGS

In order to more clearly illustrate the technical solution of the implementation of the present disclosure, the drawings used to illustrate the implementation will be briefly introduced below. It should be understood that the following drawings merely show some of the embodiments of the present disclosure and therefore should not be regarded as limiting the scope. For those of ordinary skill in the art, other related drawings can be derived based on these drawings without paying creative work.
FIG. 1 is a structural schematic diagram of the present disclosure.
FIG. 2 is a cross-sectional view of the present disclosure.
FIG. 3 is an exploded view of the present disclosure (the machine base is not shown).
FIG. 4 is a structural schematic diagram of a second rotation connector according to the present disclosure.
FIG. 5 is a structural schematic diagram showing a machine base and a work bowl according to the present disclosure.
FIG. 6 is a structural schematic diagram of an upper casing according to the present disclosure.
FIG. 7 is a top view of the upper casing according to the present disclosure.

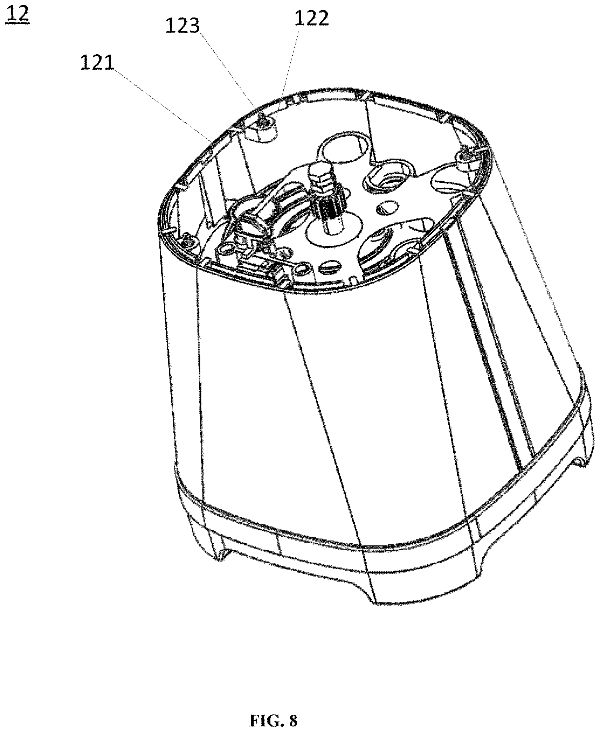

FIG. 8 is a structural schematic diagram of a lower casing according to the present disclosure.
FIG. 9 is a structural schematic diagram of a closing/opening mechanism according to the present disclosure.

### DETAILED DESCRIPTION OF THE EMBODIMENTS

In order to make the objectives, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments include part of the embodiments of the present disclosure rather than all. Based on the embodiments of the present disclosure, all other embodiments obtained by those of ordinary skill in the art without creative efforts should be considered as falling within the scope of protection of the present disclosure. Accordingly, the following detailed description of embodiments of the disclosure shown in the appended drawings is not intended to limit the scope of the disclosure but rather to represent selected embodiments of the disclosure. Based on the embodiments of the present disclosure, all other embodiments obtained by those of ordinary skill in the art without creative efforts should be considered falling within the scope of protection of the present disclosure.

In the description of the present disclosure, the terms "first" and "second" are used for descriptive purposes only and cannot be understood as indicating or implying relative importance or implicitly indicating the number of indicated technical features. Therefore, features defined as "first" and "second" may explicitly or implicitly include one or more of these features. In the description of the present disclosure, "plurality" means two or more, unless otherwise explicitly and specifically defined.

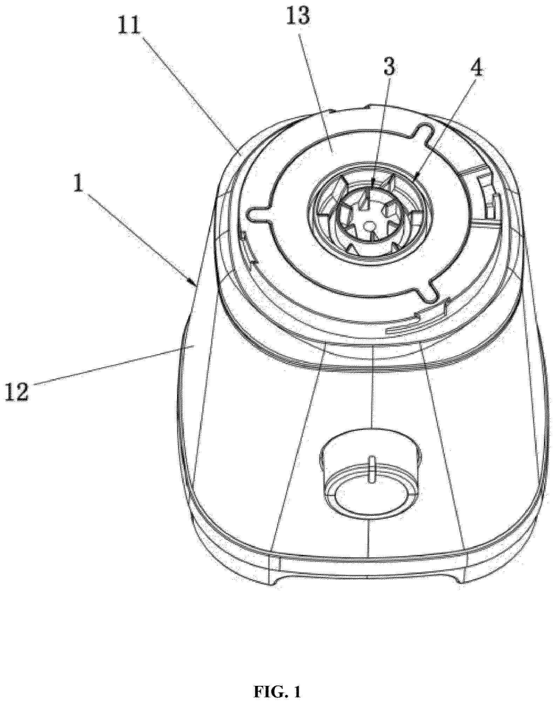

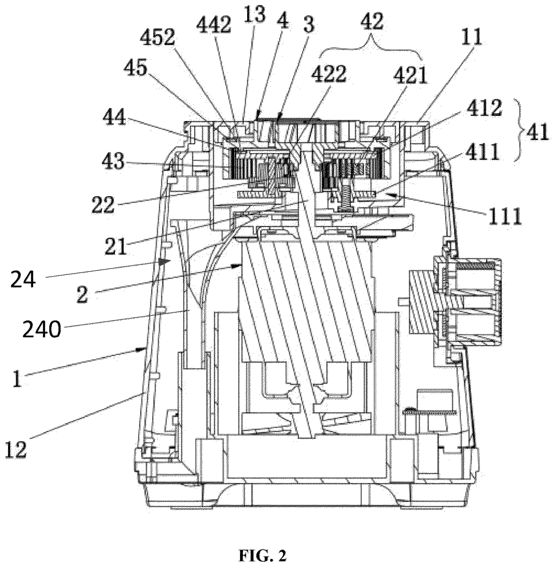

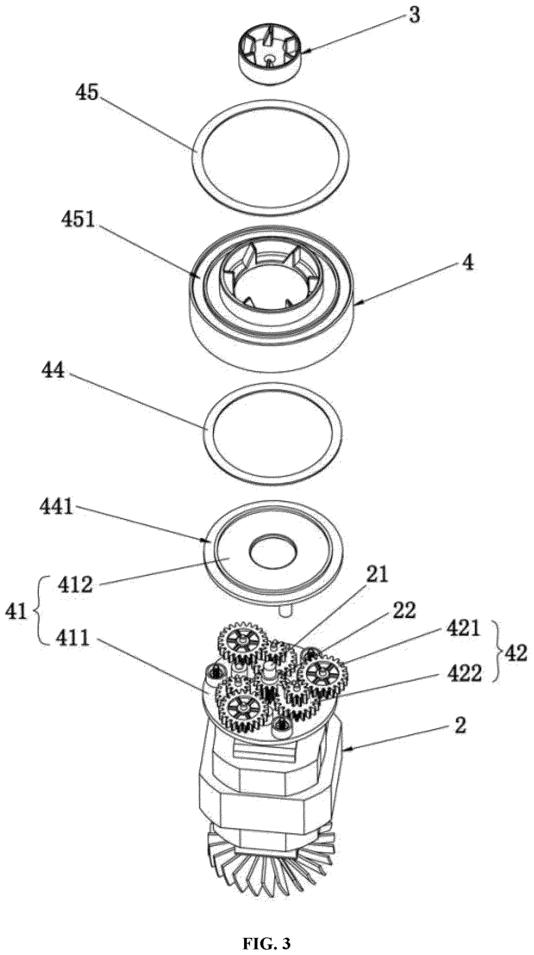

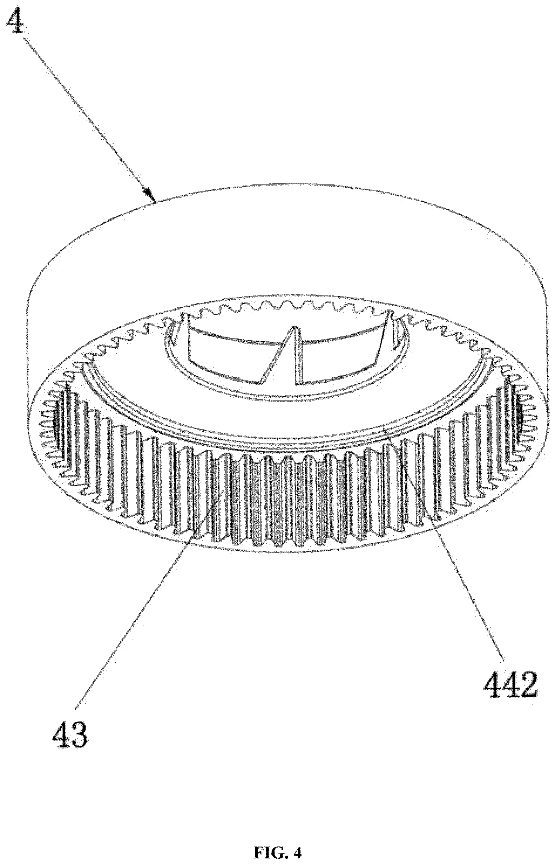

As shown in FIG. 1, and referring to FIGs. 1-4, a multifunctional food processor includes a machine base 1 and a motor 2 arranged in the machine base 1, an end of an output shaft 21 of the motor 2 is connected with a first rotation connector 3, and the output shaft 21 of the motor 2 is connected with a second rotation connector 4 through a reducing mechanism.

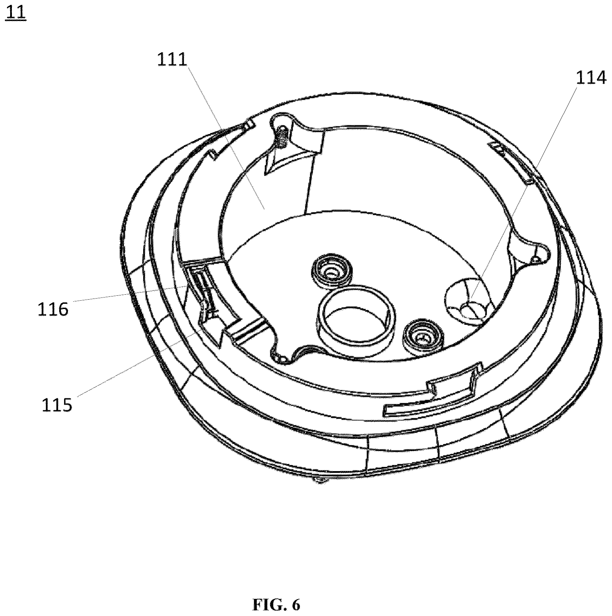

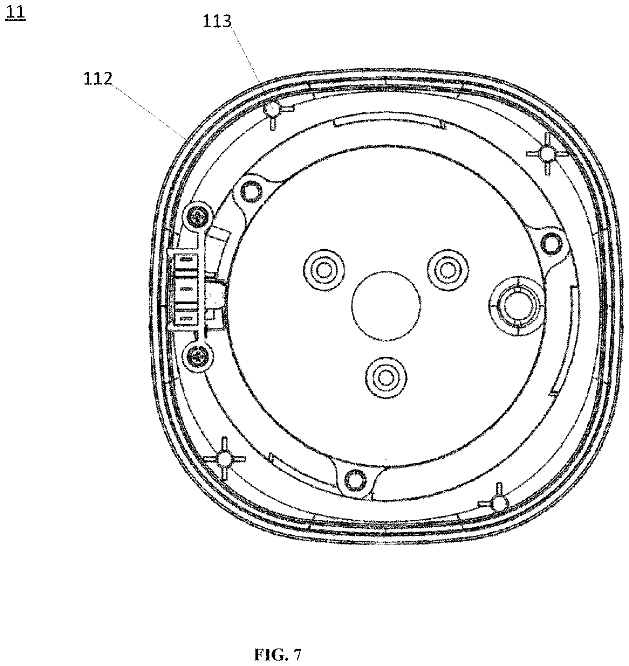

Referring to FIGs. 1-4 and FIGs. 6-7, specifically, the machine base 1 includes an upper casing 11, a lower casing 12 and a cover 13. The upper casing 11 and the lower casing 12 are fixedly connected to each other. The upper casing 11 is provided with a mounting recess 111 for mounting the reducing mechanism. The motor 2 is arranged in the lower casing 12, and the output shaft 21 of the motor 2 passes through the mounting recess 111 to be connected to the first rotation connector 3 and the reducing mechanism. The cover 13 is detachably arranged on the upper casing 11, and the cover 13 is provided with an avoidance notch above the first rotation connector 3 and the second rotation connector 4. The avoidance notch may have any profiles, such as square, rectangular, circular, elliptical or other regular or irregular geometric shapes, as long as the notch can act to offer space for the first rotation connector 3 and the second rotation connector 4. In the present disclosure, the upper casing 11 is provided with an engagement groove 112 of an annular profile, and the lower casing 12 is provided with an insertion member 121 to be engaged with the engagement groove 112, so as to facilitate the stable installation and disassembly of various components in the machine base 1. Further, the insertion member 121 is arranged at intervals, so as to lighten the weight. Furthermore, the upper casing 11 is provided with a first threaded hole 113, and the lower casing 12 is provided with a second threaded hole 122 and a nut 123 corresponding to the first threaded hole 113. In one embodiment, the first threaded hole 113 is a hollow protrusion extending inward from the upper casing 11, and the second threaded hole 122 is also a hollow protrusion extending inward from the lower casing 12. The lower casing 12 and the upper casing 11 can be further fastened by the nut 123, the first threaded hole 113 and the second threaded hole 122. The bottom of the mounting recess 111 of the upper casing 11 is further provided with a first water conduit 114.

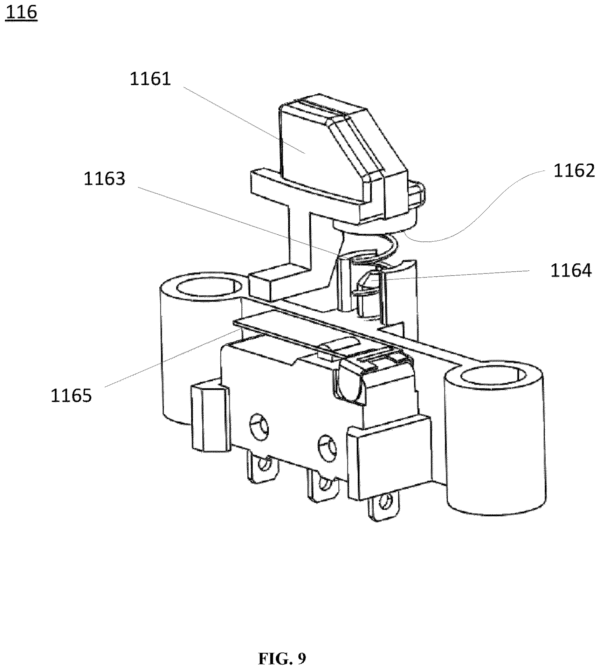

As shown in FIG. 9, further, in other embodiments, the upper casing 11 is provided with a safety groove 115, and the closing/opening mechanism 116 partially protrudes out from the safety groove 115. Specifically, the closing/opening mechanism 116 includes a pressing block 1161, a first positioning column 1162 disposed at the bottom of the pressing block 1161, a second positioning column 1164 disposed opposite to the first positioning column 1162, a spring 1163 disposed on the first positioning column 1162 and the second positioning column 1164, and an microinching elastic sheet 1165 disposed opposite to the pressing block 1161. When the work bowl 5 is engaged to the top of the machine base 1, the protrusion member on the work bowl 5 pushes the closing/opening mechanism 116, thus compressing the spring 1163, such that the pressing block 1161 presses the microinching elastic sheet 1165 to turn on the micro switch. Thereby, the control circuit in the machine base forms a closed loop, improving the safety performance.

The design of the mounting recess 111 can realize the reliable connection between the reducing mechanism and the output shaft 21 and the second rotation connector 4, thereby fully ensuring the structural stability and making the structure of the machine base 1 more compact as the volume of the machine base 1 is reduced as much as possible. Further, the design of the cover 13 can not only effectively shield the mounting recess 111 to deliver a nice appearance, but also have a waterproof and dustproof effect, thereby effectively protecting the reducing mechanism. It can be learned from the description that the present disclosure optimizes the structure of the machine base 1, and the improved machine base has the advantages of simple structure, compact arrangement, convenient disassembly and assembly, firmness, reliability, delicate and nice appearance, etc.

Referring to FIG. 1-5, specifically, the reducing mechanism includes a support frame 41 and driven gear sets 42. A plurality of the driven gear sets 42 are arranged around a periphery of the output shaft 21 through the support frame 41, and form mutual transmission with the output shaft 21 through a transmission gear 22. The second rotation connector 4 is sleeved outside the driven gear sets 42, and an inner sidewall of the second rotation connector 4 is provided with gear teeth 43 meshing with the driven gear sets 42.

Referring to FIGs. 1-4, more specifically, the support frame 41 includes a first connection plate 411 and a second connection plate 412 fixedly connected to each other and arranged in the mounting recess 111. The middles of the first connection plate 411 and the second connection plate 412 are each provided with a through hole for installing the output shaft 21, and the driven gear sets 42 are rotatably arranged on the first connection plate 411 and the second connection plate 412 around the output shaft 21. The output shaft 21 is fixedly provided with a transmission gear 22 between the first connection plate 411 and the second connection plate 412, and the first rotation connector 3 is provided above the second connection plate 412. As a preferred solution, the plurality of driven gear sets 42 include single-stage gears 421 and two-stage gears 422 meshed with each other. The single-stage gears 421 are meshed with the gear teeth 43 on the inner sidewall of the second rotation connector 4, and the two-stage gears 422 are meshed with the transmission gear 22. More preferably, three two-stage gears 422 are placed in an equilateral triangle arrangement and are meshed with the transmission gear 22, and three single-stage gears 421 are also placed in an equilateral triangle arrangement and are respectively meshed with each two-stage gear 422, so as to form a stable triangular reduction structure. Furthermore, the transmission ratio of the reducing mechanism is about 8-12:1. In one embodiment, the transmission ratio of the reducing mechanism is about 11:1, so that the speed ratio of the first rotation connector 3 and the second rotation connector 4 can reach 11:1. Specifically, when the speed of the second rotation connector 4 reaches 2100rpm, the speed of the first rotation connector 3 can reach 23000rpm. High motor speed is suitable for operations such as freshly squeezed juice with low torque requirements, while low motor speed is suitable for operations such as meat chopping with large torque requirements. In other embodiments, the speed of the second rotation connector 4 ranges 1000-3000rpm, and the speed of the first rotation connector 3 ranges 11000-33000rpm.

The motor 2 is arranged in the lower casing 12 and is supported by a motor holder 24, and the motor holder 24 is further provided with a second water conduit 240. The second water conduit 240 is configured to guide the water in the first water conduit 114 to the drain pipe of the base to be discharged. Of course, the first water conduit 114 and the second water conduit 240 can also achieve quick alignment during installation.

It can be learned from the above description that the reducing mechanism of the present disclosure has a simple structure and a compact arrangement, which overcomes the defects of the planetary gear reducer commonly used in existing food processors that has a complex structure and is too large in size, thereby making the structure of the machine base 1 more compact and flexible, and easy to store and carry.

Referring to FIGs. 1-4, specifically, a first wear-resistant sheet 44 is installed between the second rotation connector 4 and the second connection plate 412, and a second wear-resistant sheet 45 is provided between the second rotation connector 4 and the cover 13, thereby reducing unnecessary wear between the second rotation connector 4 and the second connection plate 412 and the cover 13, and allowing the second rotation connector 4 to rotate evenly and smoothly. As a preferred solution, the first wear-resistant sheet 44 and the second wear-resistant sheet 45 are both made of PTFE (polytetrafluoroethylene) material. In order to make the installation of the first wear-resistant sheet 44 and the second wear-resistant sheet 45 more stable and reliable, the second connection plate 412 is provided with an annular indentation 441 along a peripheral edge of the second connection plate 412 for assembling the first wear-resistant sheet 44, and the bottom of the second rotation connector 4 is provided with an annular raised rim 442 in contact with the first wear-resistant sheet 44. An upper end surface of the second rotation connector 4 is provided with an annular mounting groove 451 along a peripheral edge of the second rotation connector 4 for assembling the second wear-resistant sheet 45, and the bottom of the cover 13 is provided with an annular raised ridge 452 in contact with the second wear-resistant sheet 45.

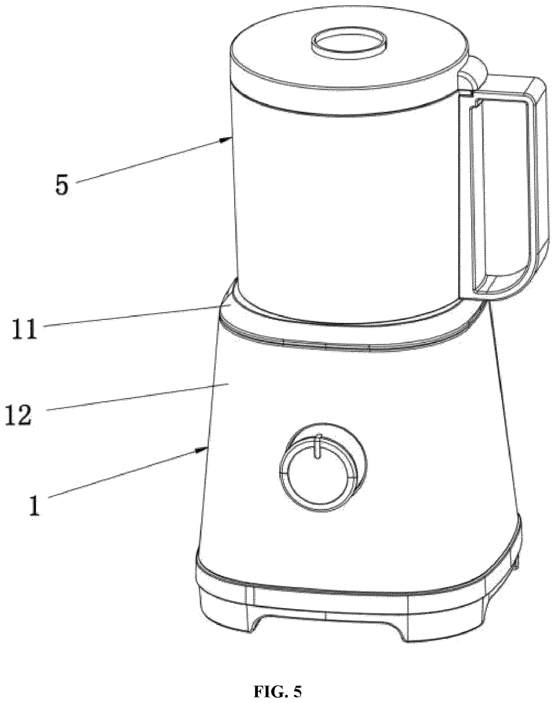

Referring to FIG. 5, specifically, the food processor further includes a plurality of work bowls 5, the bottom of each work bowl 5 is provided with a processing part and a transmission connection part for connecting the processing part to the first rotation connector 3 or the second rotation connector 4. The processing parts include a julienne slicer, a grinding knife, a stirring rod, etc. The transmission connection part connects the processing part to the first rotation connector or the second rotation connector according to the function and rotation speed requirements of each processing part, so as to facilitate the processing of different ingredients and realize different cooking methods. In practice, the work bowl 5 can be roughly classified as meat chopping bowl, julienne slicing bowl, grinding bowl, juice bowl, etc. according to the different processing parts.

The above description is merely the preferred implementation of the present disclosure, and is not intended to limit the present disclosure. For those skilled in the art, the present disclosure may have various modifications and changes. Any modification, equivalent substitution, improvement, etc. made within the spirit and principle of the present disclosure shall be included in the protection scope of the present disclosure.

## Claims

1. A multifunctional food processor, comprising a machine base and a motor arranged in the machine base, wherein an end of an output shaft of the motor is connected with a first rotation connector and is connected with a second rotation connector through a reducing mechanism; **characterized in that**, the reducing mechanism comprises a support frame and driven gear sets, the plurality of driven gear sets are arranged around a periphery of the output shaft through the support frame and form mutual transmission with the output shaft through a transmission gear; the second rotation connector is sleeved outside the plurality of driven gear sets, and an inner sidewall of the second rotation connector is provided with gear teeth meshing with the driven gear sets; wherein a transmission ratio of the reducing mechanism is 8-12:1.

2. The multifunctional food processor according to claim 1, **characterized in that** the support frame comprises a first connection plate and a second connection plate fixedly connected to each other and arranged in the machine base, middle parts of the first connection plate and the second connection plate are each provided with a through hole for installing the output shaft, and the plurality of driven gear sets are rotatably arranged on the first connection plate and the second connection plate around the output shaft, the output shaft is fixedly provided with a transmission gear between the first connection plate and the second connection plate, and the first rotation connector is provided above the second connection plate.

3. The multifunctional food processor according to claim 2, **characterized in that** the plurality of driven gear sets comprise single-stage gears and two-stage gears meshed with each other, the single-stage gears are meshed with gear teeth on an inner sidewall of the second rotation connector, and the two-stage gears are meshed with the transmission gear.

4. The multifunctional food processor according to claim 3, **characterized in that** three two-stage gears are placed in an equilateral triangle arrangement and are meshed with the transmission gear, and three single-stage gears are also placed in an equilateral triangle arrangement and are respectively meshed with each two-stage gear, so as to form a stable triangular reduction structure.

5. The multifunctional food processor according to claim 2, **characterized in that** a first wear-resistant sheet is assembled between the second rotation connector and the second connection plate.

6. The multifunctional food processor according to claim 1, **characterized in that** the machine base comprises an upper casing and a lower casing that are fixedly connected to each other, wherein the middle of the upper casing is provided with a mounting recess for mounting the reducing mechanism, the motor is arranged in the lower casing, and the output shaft passes through the mounting recess to be connected to the first rotation connector and the output shaft is connected to the second rotation connector via the reducing mechanism.

7. The multifunctional food processor according to claim 6, **characterized in that** the multifunctional food processor further comprises a cover detachably arranged on the upper casing.

8. The multifunctional food processor according to claim 7, **characterized in that** a second wear-resistant sheet is arranged between the second rotation connector and the cover.

9. The multifunctional food processor according to claim 6, **characterized in that** the upper casing is further provided with a safety groove, and a closing/opening mechanism partially protrudes out from the safety groove, when the closing/opening mechanism being pressed, the closing/opening mechanism is turned, so as to make a closed loop of the electric circuit in the machine base.

10. The multifunctional food processor according to claim 6, **characterized in that** the upper casing is provided with an engagement groove of an annular profile, and the lower casing is provided with insertion members to be engaged with the engagement groove, and the insertion members are arranged at intervals.
